# EUROPEAN PATENT APPLICATION

(11) **EP 0 738 903 A1**
(43) Date of publication of application: **23.10.1996**
(21) Application number: 96106113.2
(22) Date of filing: 18.04.1996
(51) Int. Cl.: G02B 3/00

(54) **Illumination device, in particular vehicle headlight**

(30) Priority: 19.04.1995 IT TO950311
(71) Applicant: MAGNETI MARELLI S.p.A., I-20145 Milano (IT)
(72) Inventor: Perlo, Piero, 12048 Sommariva Del Bosco (IT); Sinesi, Sabino, 10045 Piossasco (IT); Sardi, Luca, 10057 Sant'Ambrogio Torinese (IT); Monk, John, 10078 Venaria Reale (IT); Masuelli, Stefania, 10043 Orbassano (IT)
(74) Representative: Plebani, Rinaldo

(57) **Abstract**

Illumination device (10), in particular a vehicle headlight, able to emit a light beam with preset characteristics, the device including a light source (1) of any kind, a transparent support (3) delimited by a pair of opposite faces (9a, 9b) arranged in series in front of the said source, a reflector (2) arranged on the opposite side from the support with respect to the source and able to direct towards the said faces of the support respective light rays emitted by the source not directly towards the said faces, and an optional transparent protection screen (6) able to close the said device externally; the support is provided, on a first face, with a matrix of first microoptics (4) able to receive the direct or reflected light rays generated by the said source so as to vary the direction and physical characteristics thereof and each to generate a beamlet or microbeam (20, 21) already having all the same geometrical characteristics as the preset ones of the light beam; and with a matrix of second microoptics (5) carried in cascade with the first ones by a second said face of the transparent support, and are able to intercept the microbeams generated by the first microoptics in order to vary in a preset manner at least one of the following characteristics thereof: intensity, distribution, polarization.

## Description

The present invention relates to an illumination device which is particularly suitable to be employed on vehicles, mainly as a headlight, but also as a lamp.

It is known that, in particular in the field of vehicle headlights, these days a high luminous performance together with reduced bulk and geometries characterized by outer screens which, for stylistic reasons are steeply inclined, are required and that, therefore, they cannot also be used efficiently as prismatic lenses. Similar demands, albeit less severe, are present in the field of lamps; in particular, it becomes necessary evermore often, again for stylistic reasons, to minimize or even eliminate completely, the prismatics of the coloured outer lens of the lamp, which also acts as a protection screen for the said lamp. A further demand, in the field of lamps, is also to obtain light emissions in preset wavelength spectra, so as to emit light in the colours required by the various regulations, using lenses/outer screens in neutral colours or colours matching that of the bodywork of the vehicle.

Conventional illumination devices fitted with parabolic reflectors and with a transparent screen provided with refractive prisms do not satisfy the demands described. The latest generations of headlights, fitted with reflectors which are defined by surfaces described by mathematical equations formulated as a function of the final distribution of the beam which it is wished to obtain (complex surfaces) are, on the one hand, difficult to construct, often requiring the masking of the light source by means of blanking hoods which reduce or eliminate the emission of direct light, thereby reducing the luminous efficiency of the headlight, and, on the other hand, only allow reduced flexibility to be obtained. Similarly, so-called "elliptical" headlights are very bulky along the optical axis, are of low luminous efficiency and high cost, requiring a thick lens of complex shape for recollimation of the beam, and providing a not very uniform beam of high brightness (a term which defines the density of luminous intensity of a beam), something which may create visual disturbances when crossing with another vehicle.

For these reasons, German Application DE-A-4215584 envisages using diffractive optics instead of the known refractive prisms; however, no indication is given therein of any method which can be used to correct the chromatic aberration which is inevitably linked with the use of diffractive optics, nor of the other known optical problems which may arise following the use of purely diffractive optics. Italian patent applications No. TO92A000635 and No. TO92A000638, from the same Applicant, on the contrary propose to solve the problem by shaping the beam by means of diffractive, refractive or hybrid diffractive-refractive microoptic matrices arranged on one or both sides of a lamina which acts as a waveguide. The limitation of such a solution lies in the fact that, not even the use of two matrices of microoptics of the same type arranged in cascade succeeds in obtaining a wholly satisfactory shaping of the beam, at least not while limited to the use of scalar optics technologies. On the other hand, the use of more sophisticated technologies, which are possible in specific fields such as aeronautics or the military, is out of the question in the field of optical devices intended for mass production, for example in the field of vehicle technology, for obvious reasons of cost.

The aim of the present invention is therefore to provide an illumination device which can be produced in mass and at low cost, in other words using technologies of scalar optics, which device also makes it possible to obtain, simply and with reduced bulk, the desired shaping of the emitted light beam, both from the geometrical point of view (for example including the generation of a cut-off limit which is required in headlamps or fog lamps), and from the point of view of distribution, ensuring the generation of desired regions which are illuminated to a greater or lesser degree, but without the occurrence of chromatic aberrations (linked to a non-uniform distribution of the wavelengths of the beams in the focusing region) and maintaining restricted brightness.

In accordance with the invention therefore, an illumination device, in particular a vehicle headlight, is provided which is able to emit an overall light beam with preset characteristics, the device comprising a light source, a transparent support delimited by a pair of opposite faces arranged in series in front of the source, and a reflector arranged on the opposite side to the support with respect to the source and able to direct towards the said faces of the support respective light rays emitted by the source not directly towards the said faces; characterized in that it furthermore comprises a matrix of first microoptics carried by a first of the said faces of the transparent support and a matrix of second microoptics carried in cascade with the first ones by a second of the said faces of the transparent support; the said first microoptics being of a type able to receive the direct or reflected light rays generated by the said source so as to vary the direction and physical characteristics thereof and each to generate a microbeam having the same geometrical characteristics as the preset geometrical characteristics of the said overall beam; in combination, the said second microoptics being of a type able to intercept the said light rays in order to generate the said microbeams modulated in a preset manner in at least one of the following quantities: intensity, distribution and polarization.

In other words, the core of the invention consists in the fact that, rather than seeking to shape the beam in all its parameters with the same microoptics matrix (or with two matrices in cascade, but whose microoptics have essentially the same function), two microoptics matrices are used in cascade, each specializing in the shaping of different parameters, in this instance a first matrix of first microoptics made in such a way as to provide, individually microoptic by microoptic, a microbeam already having all the geometrical characteristics of the overall beam to be obtained (and, optionally, already some of the desired distribution characteristics), and a second matrix of second microoptics, generally differing from the first ones, having merely more the function of correcting the distribution, in intensity and wavelength, of the beams (such as to correct any chromatic aberrations).

In a preferred and particularly important embodiment of the invention, furthermore, the second microoptics are made in such a way as to be capable of also varying the state of polarization of the individual microbeams generated by the matrix of first microoptics, thereby allowing the generation of an overall light beam of high intensity (and therefore enabling the driver of the vehicle provided with headlights made according to the invention to obtain very good visibility) but which is not dazzling to any vehicles when crossing. In particular, this characteristic is obtained by making at least some of the second microoptics as two-level or multilevel or continuous, relief, pure phase binary diffractive elements, of the computer-generated hologram type.

In a particularly simple embodiment of the invention, the first microoptics are all made identical to one another, whereas the second microoptics consist of structured micromasks, of the grey levels or amplitude binary type.

Finally, in an embodiment of the device of the invention which is intended for the field of lamps (for example to make the rear optical units of a vehicle), the second microoptics may be made in such a way as to recombine the chromatic aberrations present in the individual microbeams (i.e. the focusing thereof at different wavelengths) over a preset spectrum of wavelengths corresponding to a particular preset colour other than white. In this case, however, light beams of red, orange, yellow, etc. light may be emitted using white light sources and without the use of coloured filters arranged near the source (such as hoods) or near the outer screen of the lamp (or independently of the colour of the latter), therefore allowing the production of optical units which come in neutral colours or are the same shade as the bodywork when they are not operative, yet are capable of furnishing light in the colours required by the regulations.

Further aims and advantages of the present invention will emerge clearly from the following description of a few non-limiting exemplary embodiments thereof, given with reference to the figures of the attached drawings, in which:
- Figure 1 represents a schematic view in elevation of a vehicle headlight made according to the invention;
- Figure 2 illustrates schematically and in perspective the principle of operation of a headlight made according to the invention;
- Figures 3 and 4 exemplify two possible types of microoptics which can be used in the device of the invention;
- Figure 5 illustrates schematically a microoptics matrix used in the device of Figure 1;
- Figures 6 (a) and (b) respectively illustrate two opposite embodiments of the same detail of the illumination device of Figure 1;
- Figure 7 illustrates a possible embodiment of a microoptics matrix of the device according to the invention; and
- Figure 8 illustrates schematically a variant to the principle of operation of Figure 2.

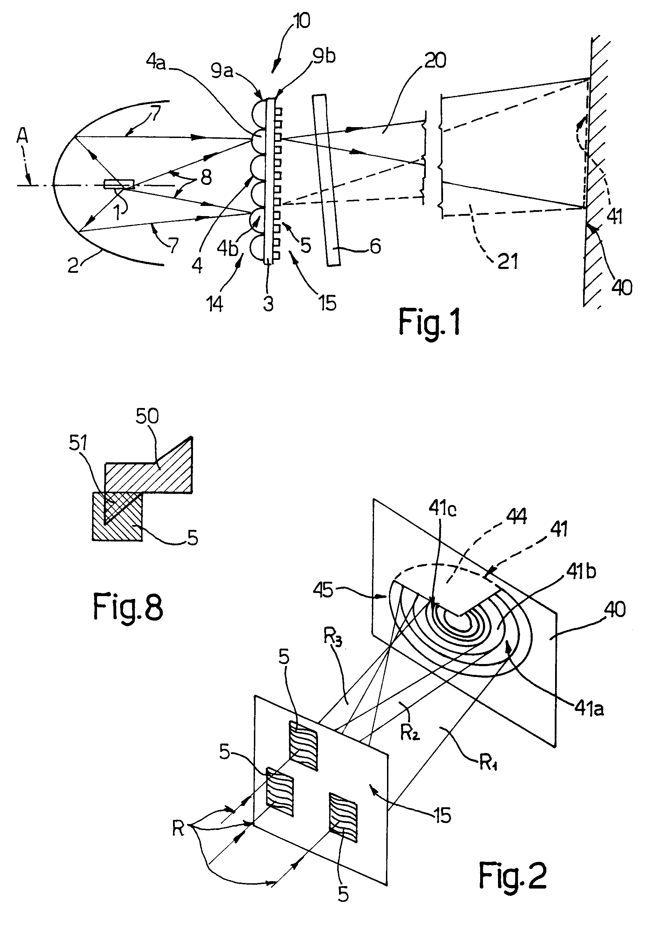

With reference to Figures 1 and 2, indicated overall as 10 is an illumination device, in this instance a vehicle headlight, essentially comprising a casing (which is known but not illustrated for the sake of simplicity) inside which are arranged a light source 1 and a reflector 2, and which is closed externally (for example in a fluid-tight manner) by a transparent screen 6 arranged somehow in front of the reflector 2 and the source 1. According to the invention, furthermore, inside the aforesaid casing is also housed, again in front of the source 1 and the reflector 2, but before the screen 6, a transparent support 3 defined by a plane lamina made from a heat-resistant glass or plastic material, and delimited between two opposite faces or front surfaces 9a and 9b arranged in series in front of the source 1 with respect to the path of the light rays 7, 8 emitted thereby, which path is indicated by the arrows.

In this instance, the reflector 2 is arranged on the opposite side from the support 3 with respect to the source 1 and is able to direct towards the faces 9a, 9b of the support 3 respective light rays 7 emitted by the source 1 not directly towards the faces 9a, 9b. Instead these receive, directly, the rays 8 emitted by the source 1 towards the support 3. According to the invention, two cascaded (with respect to the path of the rays 7 and 8) matrices of first microoptics 4 and of second microoptics 5, indicated overall as 14 and 15 respectively, are arranged on the faces 9a and 9b.

The light source 1 may be of any type, able to emit monochromatic, polychromatic, coherent, partially coherent or fully incoherent light; for example it may be a filament (incandescent), gas, ion discharge or solid-state polymeric bulb, or consist of a laser; the reflector 2 is conversely defined by a reflecting surface generated by revolving one or more base curves and, generally, is a conventional parabolic reflector; it is therefore extremely simple and economical to construct. Similarly, the outer transparent screen 6 is preferably completely smooth and devoid of any optical function and can therefore be made in any shape (steep, curved, etc.) and arranged at any inclination, even very high, with respect to the optical axis, indicated schematically as A.

In case of necessity and/or having recourse to a favourable positioning, the screen 6 may however also be endowed with optical functions, for example of traditional prismatics, or carry internally, on the side pointing towards the support 3, microoptics analogous to 4 and 5, however distributed and however made on the support. For example, the matrices 14 and 15 of microoptics 4 and 5 respectively, are preferably not made directly on the faces 9a and 9b, but, according to a known technology, are made on respective transparent films (which are known but not illustrated), which are in turn applied as a coating to the faces 9a and 9b, for example by cementing.

According to what is illustrated schematically in Figure 1, the microoptics 4 forming part of the matrix 14 are of a type able to receive the direct 8 or reflected 7 light rays generated by the source 1 so as to vary the direction and physical characteristics thereof and each to generate a microbeam (for the sake of simplicity, Figure 1 only shows two microbeams 20 and, dashed, 21, which are generated by two different microoptics 4a and 4b) already having as inherent geometrical characteristics all of those geometrical characteristics which it is wished to obtain for the overall beam generated by the device 10. Therefore, in this instance, each microbeam 20, 21, etc., produced by each individual microoptic 4, is individually controlled by the latter in its vergence, i.e. each microoptic 4 defines a microbeam inclined differently with respect to the optical axis A and which "opens out" towards the outside of the device 10 in the direction of propagation at a different angle; but whatever the angles of divergence and/or of orientation of the microbeams, each microbeam, in this instance the two different microbeams 20 and 21, projects, for example on a screen 40 arranged a preset distance from the source 1, in front of the latter, an image or pattern 41 (indicated dashed in Figure 1) which is the same as that projected on the same screen 40 by the overall beam emitted by the device 10.

In other words, the overall beam generated by the device 10 according to the invention in the absence of the microoptics 5, as well as each microbeam, such as 20 and 21, generated by an individual microoptic 4, define identical and mutually overlapping images 41 on the screen 40; according to the invention, furthermore, in combination with the said characteristic, the microoptics 5 are made of a type such as to be able to intercept the microbeams 20, 21, etc. generated by the microoptics 4 in order to modulate them in a preset manner, individually or contemporaneously, in one or more of the following quantities: intensity, distribution and polarization. Consequently, the overall beam produced by the device 10 is generated, according to the invention, by superimposing all the microbeams generated by the microoptics 4 and, optionally, modified in their characteristics other than those which are purely geometrical, by the microoptics 5.

The final effect which can be obtained is therefore that illustrated in Figure 2, where the light rays R belonging to the various microbeams generated by the microoptics 4 are intercepted, before passing through the screen 6, by the microoptics 5 of the matrix 15 and are modified by these in the distribution in intensity and, as will be seen, also in wavelength and in polarization; consequently, "corrected" microbeams R₁, R₂ and R₃ emerge from the matrix 15 and form, on the screen 40, images 41a, 41b and 41c which overlap one another and which are similar in shape to the image 41 of Figure 1, defining a final overall image 45 which has the same outline (illustrated dashed in Figure 2) as the image 41 but which exhibits regions which have a different distribution of luminous intensity: for example, according to what is illustrated in a non-limiting and merely schematic manner, the images 41a, 41b and 41c and, consequently, the overall image 45, exhibit a region 44 at zero luminous intensity, and overlap one another in a different way from point to point, thus defining isolux contours or lines, inside which the luminous intensity of the image 45 varies in a desired manner, for example is more intense towards the centre of the pattern. A luminous distribution typical of a dipped beam can be obtained in this way.

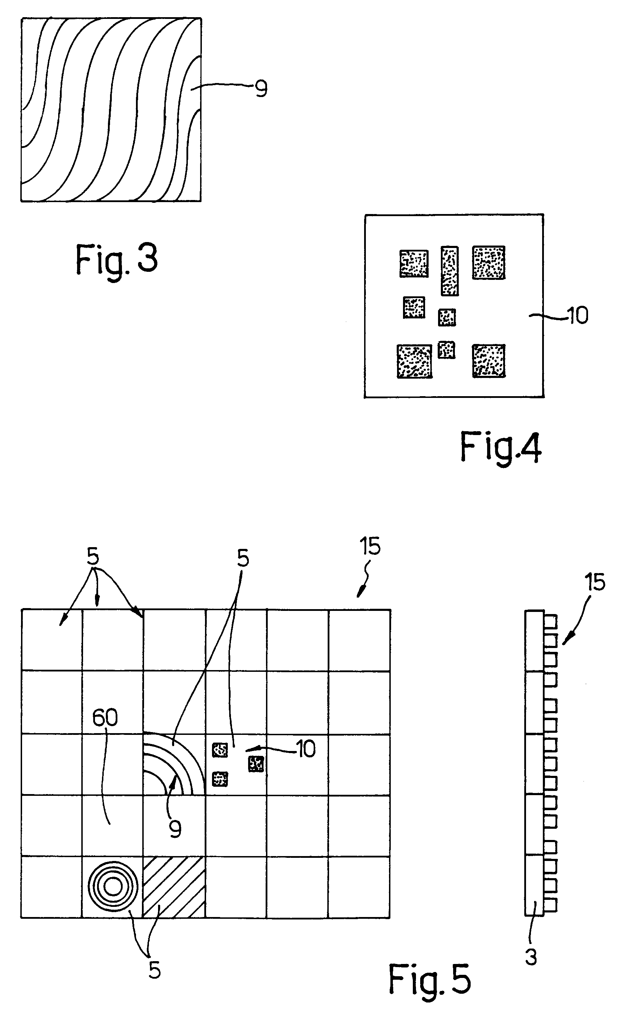

With reference to Figures 3 and 4, each microoptic 4 or 5 can be defined by a known element describable by a complex transmission function, respectively of analytical type suitably discretized (element 9), or of digital type (element 10), in which the function describes the presence of binary codes defined by reliefs (high/low) or by barriers (pass/no-pass); therefore, the microoptics 4, 5 can be of pure phase, i.e. able to transmit all the incident light, or else of amplitude, i.e. which absorb or reflect a portion of the beam incident thereon.

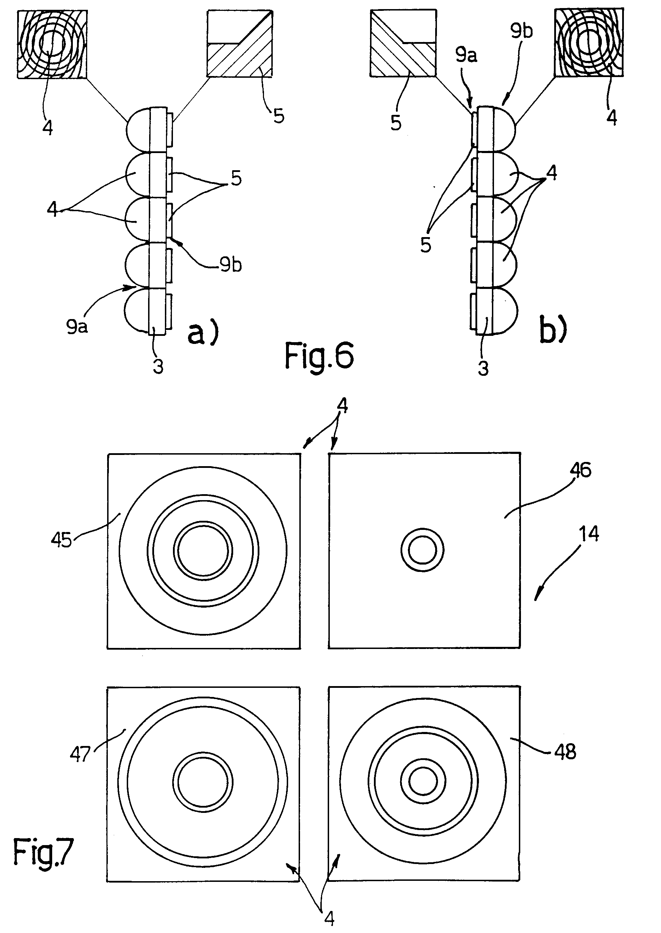

Furthermore, in view of the differentiation of functions upon which the invention is based, the microoptics 4 of the matrix 14 (a portion of which is illustrated, on an enlarged scale, in Figure 7) are all identical to one another or differ from one another, exhibiting exclusively constant, or periodic or quasi-periodic predefined phase variations with respect to one another; for example, two adjacent microoptics 4 may differ from one another only through the phase constant, which varies in relation to the position of the two microoptics 4 in the matrix 14. In the example illustrated, and for the reason which will be evident later, multifocal optic elements 45, 46, 47 and 48 are used as microoptics 4. Conversely, as is clearly illustrated in Figure 5, the microoptics 5 of the matrix 15 may also all be different from one another, and digital optical elements 10 may be mixed with analytical optical elements 9.

With reference to Figure 6, the arrangement of the microoptics 4 and 5 in a particular sequence along the path of the rays 7, 8 is not a determining factor, so that (Figure 6a) the microoptics 4 may be carried by that face 9a of the support 3 which points towards the source 1, whereas the microoptics 5 are carried by the opposite face 9b, or alternatively (Figure 6b) the face 9a carries the microoptics 5 whereas 9b carries the microoptics 4. In the example of Figure 6, which relates to the preferred and simpler embodiment of the invention and to the operating example illustrated in Figure 2, it is furthermore shown that the microoptics 5 may preferably all consist of amplitude microoptics, in this instance of micromasks, for example structured micromasks of the grey levels or amplitude binary type.

For example, the micromasks 5 may all have the same shape of cut-off line to be obtained, and be able to absorb or reflect in full (generating the region 44 with zero luminous intensity) or merely in part (generating the region with different luminous intensity in the overall pattern 45) the portion of beam incident on the masked portions thereof. Obviously, the masks 5 need not necessarily have the shape of the cut-off to be obtained; the latter may, in fact, be obtained (Figure 8) by generating by means of the microoptics 4 an overall pattern 50 of appropriate shape and in which a bottom portion 51 is then suppressed by means of the micromasks 5.

In each case (Figure 2), the beamlets or microbeams generated by the rays 7, 8 by means of the microoptics 4, and already having all the characteristics required of the overall beam by the regulations, emerge from the microoptics 5 and add together incoherently to form the overall light beam, which differs from the individual microbeam (for example 20 or 21) generated by an individual microoptic 4 not in its general shape, but mainly in its values of intensity. As already described, phasewise different microoptics 4 are used in order to better control the uniformity of the overall light beam in the case of polychromatic sources 1, in particular for those which are coherent.

More generally, the microoptics 4 can be refractive microoptics, diffractive microoptics, or hybrid refractive-diffractive microoptics, whereas the microoptics 5 are exclusively diffractive or hybrid refractive-diffractive; furthermore, the microoptics 4 are preferably shaped so as to be able to control not only the geometrical characteristics of the microbeams 20, 21, etc., but also, at least within certain limits, to individually vary the intensity of each microbeam, in such a way as to control, already with the matrix 14, at least part of the intensity distribution of the overall beam; this can be obtained by suitably selecting the shape of the perimetral outline of each microoptic 4 (which may be round, square, hexagonal, etc.), since a definite shape of outline, combined with a definite type of microoptic already provides a preset divergence; hence, the appropriate combination of the geometry of the microlenses with their optical characteristics enables a modification of the shape and intensity of the individual microbeams to be obtained simultaneously.

Generally, the number of microoptics 4 of the matrix 14 chosen is equal to the number of microoptics 5 of the matrix 15, in such a way that to each microoptic 4 there corresponds one 5 in cascade. Nevertheless, for the purposes of facilitating the intensity modulation of the beamlets emerging from the matrix 15, the microoptics 5 present in the latter may be fewer in number than that of those 4 in the matrix 14, so that the same microoptic 5 intercepts, in different positions thereon, at least two different microbeams generated by two different microoptics 4.

Specific types of microoptic which are preferred in order to embody the invention comprise two-level or multilevel or continuous relief, pure phase binary diffractive elements, of the computer-generated hologram type, prismatic elements of diffractive or microrefractive type and, specifically for the microoptics 4, diffractive, refractive or hybrid general aspherical elements.

According to a preferred and important variant of the invention, the microoptics 5 are made in whole or in part as elements of the computer-generated hologram type shaped in such a way as to vary the state of polarization of the microbeams 20, 21, etc. which are intercepted by them; this variant is particularly useful in respect of devices 10 intended to be used as headlights: in this manner, in fact, it is possible to attenuate or prevent dazzling when crossing, while retaining beams having high luminous intensity. Depending on the demands, and as shown in Figure 5, some of the microoptics 5 can also consist of plane transparent elements 60 of the window type, so as not to vary the characteristics of the microbeams intercepted by the said elements.

Preferred optical elements for embodying the microoptics 4 and 5 are also subwavelength diffractive structures, otherwise known as zero-order diffractive structures, or else elements able to generate a high number of light spots, of the type: fanout gratings, multi-order gratings, Dammann gratings, and their generalizations having symmetrical or asymmetrical structures. In fact, these particular elements make it possible to attenuate or solve, as will be seen, the problem of the generation of chromatic aberrations in the overall beam, which are connected with the shifts in the wavelength distribution of the light rays produced by microoptics of diffractive type.

A first solution to the abovementioned problem, consists in using, according to the invention, microoptics 4 exhibiting dispersive chromatic characteristics opposite to those of the corresponding microoptics 5; so, for example, in conjunction with microoptics 5 of diffractive type, it will be necessary to use microoptics 4 of exclusively refractive type. A second solution to the problem is to be mindful that at least one of the two matrices 14 and 15 of microoptics 4 and 5 consists exclusively of pure-phase microoptics of the kinoform type, of higher order than the first one, which consist of hybrid refractive-diffractive microlenses which are sufficiently thick to obtain refraction and are provided with reliefs of different height arranged as a grating, to obtain diffraction.

A further solution to the problem is to use microoptics 5 of monofocal type, all differing from one another and distributed in the matrix 15 in such a way as to correct the chromatic aberrations present in the microbeams intercepted by them around preset wavelengths, in this instance such as to obtain a recombination to white light through the effect of the incoherent addition of the individual microbeams. In the case of devices 10 intended for use as lamps, or else for fog lamps, however, such recombination, where possible, could also be carried out to some other colour, for example red or, respectively, yellow, so as to generate light of the desired colour without the help of coloured filters.

Another possible solution is to use matrices of microoptics, in particular a matrix 14 of microoptics 4 like that of Figure 7, composed exclusively of diffractive but multifocal microoptics, like the elements 45-48; in this way, the microbeams generated, which would be focused at different wavelengths through the diffractive effect, will be refocused by the lens on the screen 40, avoiding chromatic aberration.

A further solution, adoptable in the case described earlier of the use for the matrices 14, 15 of elements able to generate a high number of light spots, such as fanout, Dammann, etc. gratings, is finally to use microoptics 5 devised to produce a partial superposition between the light spots generated by the elements defining the individual microoptics 4 with those of the elements defining the individual microoptics 5; in fact, such partial superposition, if properly devised, produces a recombination of the chromatic aberrations present in the individual microbeams around preset wavelengths, in this instance white light or, also, as described earlier, some other preset colour, for example red, yellow, orange, etc., a feature which is particularly useful in the case of lamps.

## Claims

1. Illumination device (10), in particular a vehicle headlight, able to emit an overall light beam with preset characteristics, the device comprising a light source (1), a transparent support (3) delimited by a pair of opposite faces (9a, 9b) arranged in series in front of the source, and a reflector (2) arranged on the opposite side from the support with respect to the source and able to direct towards the said faces of the support respective light rays (7) emitted by the source not directly towards the said faces; characterized in that it furthermore comprises a matrix (14) of first microoptics (4) carried by a first (9a) of the said faces of the transparent support (3) and a matrix (15) of second microoptics (5) carried in cascade with the first ones by a second (9b) of the said faces of the transparent support; the said first microoptics (4) being of a type able to receive the direct or reflected light rays (7, 8) generated by the said source so as to vary the direction and physical characteristics thereof and each to generate a microbeam having the same geometrical characteristics as the preset geometrical characteristics of the said overall beam; in combination, the said second microoptics (5) being of a type able to intercept the said light rays in order to generate the said microbeams modulated in a preset manner in at least one of the following quantities: intensity, distribution and polarization.

2. Illumination device according to Claim 1, characterized in that the first microoptics (4) forming the microoptics matrix carried by the first face are all identical to one another.

3. Illumination device according to Claim 1, characterized in that at least some of the first microoptics (4) forming the microoptics matrix carried by the first face differ from one another, exhibiting exclusively predefined phase variations with respect to one another.

4. Illumination device according to Claim 3, characterized in that the said phase variations are constant, or periodic or quasi-periodic.

5. Illumination device according to one of the preceding claims, characterized in that the said first microoptics (4) are of a type each able to generate one said microbeam, controlled individually in its vergence; each said microbeam (20, 21) projecting at a preset distance from the said source the same projected pattern (41), at the same distance, from the said overall beam of the device, which is consequently generated by the superposition of the said microbeams.

6. Illumination device according to Claim 5, characterized in that the first microoptics (4) also control at least part of the intensity distribution of the said overall beam, being of a type able to vary the intensity of each of the said microbeams (20, 21) individually.

7. Illumination device according to any one of the preceding claims, characterized in that at least the said first microoptics (4) exhibit a perimetral outline of shape such as to determine a modification of the shape and/or of the intensity of the said microbeams.

8. Illumination device according to any one of the preceding claims, characterized in that the said second microoptics (5) making up the microoptics matrix (15) carried by the second face of the transparent support are equal in number to that of the first microoptics (4) making up the microoptics matrix (14) of the first face of the support.

9. Illumination device according to any one of Claims 1 to 7, characterized in that the said second microoptics (5) making up the microoptics matrix (15) carried by the second face of the transparent support are fewer in number than that of the first microoptics (4) making up the microoptics matrix (14) of the first face of the support, so that the same second microoptic (5) intercepts, in different positions thereon, at least two different microbeams generated by two different first microoptics (4).

10. Illumination device according to any one of the preceding claims, characterized in that the said first microoptics (4) are chosen from the group consisting in: refractive microoptics, diffractive microoptics, hybrid refractive-diffractive microoptics, respectively of pure phase or of amplitude and of analytical or digital type.

11. Illumination device according to any one of the preceding claims, characterized in that the said second microoptics (5) are chosen from the group consisting in: diffractive microoptics and hybrid refractive-diffractive microoptics, respectively of pure phase or of amplitude and of analytical or digital type.

12. Illumination device according to any one of the preceding claims, characterized in that the said light source (1) is chosen from the group consisting in: filament, gas, ion discharge or solid-state polymeric bulbs; the said reflector being defined by a reflecting surface generated by revolving one or more base curves; and the said device (10) furthermore comprising an outer transparent screen (6) arranged in front of the said support (3) so as to be traversed by the said overall beam.

13. Illumination device according to Claim 12, characterized in that the said outer transparent screen (6) is completely smooth and devoid of any optical function.

14. Illumination device according to any one of the preceding claims, characterized in that the said transparent support (3) consists of a plane lamina made from a glass or plastic material and delimited between the said faces (9a, 9b), the said matrices (14, 15) of first and second microoptics (4, 5) being made on respective transparent films applied as a coating to the said faces.

15. Illumination device according to any one of the preceding claims, characterized in that the said microoptics (4, 5) comprise prismatic elements of diffractive or microrefractive type.

16. Illumination device according to any one of the preceding claims, characterized in that the first microoptics (4) comprise diffractive, refractive or hybrid general aspherical elements.

17. Illumination device according to any one of the preceding claims, characterized in that the said microoptics (4, 5) comprise two-level or multilevel or continuous relief pure phase binary diffractive elements, of the computer-generated hologram type.

18. Illumination device according to Claim 17, characterized in that the second microoptics (5) comprise elements of the computer-generated hologram type shaped in such a way as to vary the state of polarization of the microbeams (20, 21) intercepted by the said elements.

19. Illumination device according to my one of the preceding claims, characterized in that the second microoptics (5) comprise plane transparent elements of the window (60) type, so as not to vary the characteristics of the microbeams intercepted by the said elements.

20. Illumination device according to any one of the preceding claims, characterized in that the second microoptics (5) comprise structured micromasks of the grey levels or amplitude binary type.

21. Illumination device according to any one of the preceding claims, characterized in that the said microoptics (4, 5) comprise elements consisting of subwavelength diffractive structures (zero-order diffractive structures).

22. Illumination device according to any one of the preceding claims, characterized in that the said microoptics (4, 5) comprise elements able to generate a high number of light spots, of the type: fanout gratings, multi-order gratings, Dammann gratings, and their generalizations having symmetrical or asymmetrical structures.

23. Illumination device according to any one of the preceding claims, characterized in that the first microoptics (4) exhibit dispersive chromatic characteristics opposite to those of the corresponding second microoptics (5).

24. Illumination device according to any one of Claims 1 to 22, characterized in that the said first microoptics (4) are exclusively of refractive type.

25. Illumination device according to any one of Claims 1 to 22, characterized in that at least one of the said two matrices (14, 15) of microoptics consists exclusively of pure-phase microoptics of the kinoform type of higher order than the first one.

26. Illumination device according to any one of Claims 1 to 22, characterized in that the second microoptics (5) are monofocal microoptics which differ from one another and are distributed in the matrix (15) in such a way as to correct the chromatic aberrations present in the microbeams (20, 21) around preset wavelengths.

27. Illumination device according to any one of Claims 1 to 22, characterized in that at least one (14) of the said matrices (14, 15) of microoptics present on the faces of the said transparent support (3) is composed exclusively of multifocal microoptics (45-48).

28. Illumination device according to Claim 22, characterized in that the second microoptics (5) are able to produce a partial superposition between the said light spots generated by the elements defining the microoptics (4, 5); the said partial superposition being such as to produce a recombination of the chromatic aberrations present in the said individual microbeams around preset wavelengths.

29. Illumination device according to my one of the preceding claims, in particular a lamp (10) for automobiles, characterized in that the second microoptics (5) comprise elements able to recombine the chromatic aberrations present in the individual microbeams over wavelengths specific to a particular preset colour.
